# EUROPEAN PATENT APPLICATION

(11) **EP 4 822 042 A1**
(43) Date of publication of application: **14.10.2026**
(21) Application number: 25816901.0
(22) Date of filing: 07.07.2025
(51) Int. Cl.: C22B 3/44, C22B 7/00, C22B 23/00, C22B 47/00

(54) **PRECIPITATION METHOD FOR HEAVY METAL SOLUTION**

(30) Priority: 10.02.2025 CN 202510145092
(71) Applicant: China Enfi Engineering Corporation, Beijing 100038 (CN); China Enfi Engineering Co., Ltd., Beijing 100038 (CN)
(72) Inventor: YIN, Shuyan, Beijing 100038 (CN); SUN, Ninglei, Beijing 100038 (CN); ZHANG, Yang, Beijing 100038 (CN); DING, Shurong, Beijing 100038 (CN); DING, Jian, Beijing 100038 (CN); CAO, Min, Beijing 100038 (CN); FU, Guoyan, Beijing 100038 (CN); LIU, Guo, Beijing 100038 (CN)
(74) Representative: Germain Maureau
(86) International application number: PCT/CN2025/107304
(87) International publication number: WO 2026/166049

(57) **Abstract**

The present disclosure provides a method for precipitating a heavy metal solution. The cations in the heavy metal solution include nickel ions, cobalt ions, copper ions, zinc ions, and manganese ions, and the precipitation method includes: S100, conducting a manganese conversion reaction on an alkaline substance by using a solution containing manganese ions to obtain a converted manganese precipitate; S200, conducting a stabilization reaction on the converted manganese precipitate by using a stabilizer to obtain a stabilized manganese precipitate; S300, adding the stabilized manganese precipitate into the heavy metal solution for conducting a precipitation reaction to obtain a precipitated slurry; S400, continuously conducting a solid-liquid separation on the precipitated slurry to obtain a heavy metal precipitate and a manganese-containing solution; and S500, conducting an oxidation precipitation reaction on raw materials including the manganese-containing solution, an oxidant, and an alkaline solution to obtain a solution after oxidation precipitation and a manganese product. This method solves the problems of poor sedimentation and filtration performance of precipitated product, high water content of precipitated product and low precipitation efficiency when precipitating heavy metals in the heavy metal solution

## Description

### Technical Field

### CROSS-REFERENCE TO RELATED APPLICATIONS

The present disclosure claims priority to Chinese Invention Patent Application No. 202510145092.0, filed to the National intellectual property administration, PRC on February 10, 2025, titled "Method for precipitating heavy metal solution", the entire contents of which are incorporated herein by reference.

### Technical Field

The present disclosure relates to the technical field of heavy metal hydrometallurgy, in particular to a method for precipitating a heavy metal solution.

### Background Art

The precipitation enrichment method is used in various fields of hydrometallurgy, such as precipitation enrichment of nickel and cobalt in laterite-nickel ore hydrometallurgy, precipitation enrichment of nickel, cobalt and copper after battery material recycling and leaching, etc. These processes require the use of precipitants for reaction, generally, the precipitants are various alkalis, these alkaline substances may bring sodium ions into the system, and the direct precipitated product has poor sedimentation and filtration performance, high water content, and serious environmental pollution. The processes are difficult to implement in engineering, and bring great difficulty to production.

The nickel-cobalt precipitation process in the related art mostly adopts sodium hydroxide or sulfide precipitation method, for example:
Patent No. CN101575676A discloses a method for iron removal and nickel-cobalt enrichment by precipitation, wherein the nickel-cobalt enrichment process is conducted by using a sulfurizing agent for sulfide precipitation, the sulfurizing agent is one or more of hydrogen sulfide, hydrogen persulfide, sodium hydrosulfide, sodium sulfide, potassium sulfide, ammonium sulfide, magnesium sulfide and zinc sulfide. Hydrogen sulfide has the best precipitation effect, but hydrogen sulfide is highly toxic, which requires high operation and system, and the subsequent treatment for the intermediate product of sulfide precipitation is difficult.

Patent No. CN102061387A discloses a two-stage nickel precipitation method, in which a NaOH solution is added to a nickel sulfate solution containing magnesium, the pH is adjusted to 7.5 to 8.5, the reaction temperature is 20 to 80°C, and the reaction time is 0.5 to 3 hours, and the obtained precipitate is separated from the mother liquor. The precipitate enters the next stage, a NaOH solution is added to the mother liquor, the pH is adjusted to 9 to 10, the reaction temperature is 20°C to 80°C, the reaction time is 0.5 to 3 hours, and the finally obtained precipitate is separated from the mother liquor and then returned to the stirring and leaching system for circulation. In this disclosure, nickel and cobalt are directly precipitated with sodium hydroxide or mixed alkaline solution, new sodium ions are introduced into the system, and the product is fine and difficult to settle, resulting in high water content of the product.

In summary, the hydrogen sulfide process for nickel-cobalt precipitation is widely used, which has the advantages of high precipitation rate, low precipitation pH, and recovery of nickel and cobalt from leachate solution under acidic condition without purification. However, hydrogen sulfide is highly toxic, which makes safety and environmental hazards very great, and the subsequent treatment process of the intermediate product obtained by precipitation is also extremely cumbersome. The sodium hydroxide process for nickel-cobalt precipitation is simple and the equipment investment is small. However, the direct use of strongly alkaline sodium hydroxide as a precipitant will lead to a small particle size of the nickel-cobalt hydroxide (MHP) precipitate product, introduction of new sodium ion impurities, poor sedimentation ability, which is not conducive to the liquid-solid separation process, and the high water content of the filter cake causes difficulties for subsequent transportation and treatment.

In view of this, the present disclosure is proposed.

### Disclosure

In view of the above problems, an object of the present disclosure is to provide a method for precipitating a heavy metal solution, so as to solve the problems of poor sedimentation and filtration performance of precipitated product, high water content of the precipitated product and low precipitation efficiency when precipitating heavy metals in the heavy metal solution in the related art.

In order to achieve the above object, according to an aspect of the present disclosure, there is provided a method for precipitating a heavy metal solution, cations in the heavy metal solution including nickel ions, cobalt ions, copper ions, zinc ions, and manganese ions, wherein the method includes: S100, conducting a manganese conversion reaction on an alkaline substance by using a solution containing manganese ions to obtain a converted manganese precipitate; S200, conducting a stabilization reaction on the converted manganese precipitate by using a stabilizer to obtain a stabilized manganese precipitate; S300, adding the stabilized manganese precipitate into the heavy metal solution for conducting a precipitation reaction to obtain a precipitated slurry; S400, continuously conducting a solid-liquid separation on the precipitated slurry to obtain a heavy metal precipitate and a manganese-containing solution; and S500, conducting an oxidation precipitation reaction on raw materials including the manganese-containing solution, an oxidant, and an alkaline solution to obtain a solution after oxidation precipitation and a manganese product.

An optional technical solution is that, in the above step S100, the solution containing manganese ions has a mass concentration of manganese ions of 1 g/L to 300 g/L, preferably 1 g/L to 80 g/L, preferably 1 g/L to 30 g/L, and further preferably 10 g/L to 20 g/L.

An optional technical solution is that, in the above step S100, the heavy metal solution is any one selected from a group consisting of a solution obtained after an iron and aluminum removal treatment on a laterite nickel ore acid leachate, a battery material black powder leachate in the field of lithium battery recovery, and a copper-cobalt solution in copper-cobalt hydrometallurgy.

An optional technical solution is that, in the above step S100, the alkaline substance is any one or more selected from a group consisting of a hydroxide, an alkaline earth metal oxide, a carbonate and a bicarbonate, wherein the hydroxide is any one or more selected from a group consisting of sodium hydroxide, potassium hydroxide, magnesium hydroxide, calcium hydroxide, ammonium hydroxide and lithium hydroxide; the alkaline earth metal oxide is any one or more selected from a group consisting of magnesium oxide and calcium oxide; the carbonate is any one or more selected from a group consisting of magnesium carbonate, calcium carbonate, potassium carbonate, sodium carbonate and ammonium carbonate; and the bicarbonate is any one or more selected from a group consisting of magnesium bicarbonate, calcium bicarbonate, potassium bicarbonate, sodium bicarbonate and ammonium bicarbonate; further, the alkaline substance is preferably a combination of sodium hydroxide and potassium hydroxide, and the mass ratio of sodium hydroxide to potassium hydroxide is preferably 1to 4:1to 4.

An optional technical solution is that, in the above step S100, the alkaline substance is added in an amount of 0.1 to 3 times, preferably 0.8 to 1.5 times, and further preferably 0.8 to 0.9 times, based on a stoichiometric molar ratio of a chemical reaction between the alkaline substance and the manganese ions to generate a manganese precipitate.

An optional technical solution is that, in the above step S100, the manganese conversion reaction is conducted at a temperature of 25°C to 100°C, preferably 60°C to 100°C, and the manganese conversion reaction is conducted for 0.1 min to 30 min, preferably 1 min to 5 min.

An optional technical solution is that, in the above step S100, the solution containing manganese ions is derived from any one selected from a group consisting of the manganese-containing solution, a liquid phase after leaching a ternary battery, and a liquid phase of an ore slurry after an one-stage nickel-cobalt precipitation.

An optional technical solution is that, in the above step S200, the stabilization reaction is conducted at a temperature of 25°C to 100°C, preferably 60°C to 100°C, and the stabilization reaction is conducted for 0.1 min to 180 min, preferably 30 min to 60 min.

An optional technical solution is that, in the above step S200, the mass of the stabilizer is 0.1% to 30% of the mass of the converted manganese precipitate, preferably 1% to 5%.

An optional technical solution is that, in the above step S200, the stabilizer is any one or more selected from a group consisting of glucose, sulfur dioxide, a sulfite, L-ascorbic acid, an alcohol and an aldehyde; preferably, the sulfite is sodium sulfite and/or potassium sulfite, further preferably, the sulfite is sodium sulfite.

An optional technical solution is that, in the above step S300, a ratio of a total molar amount of heavy metal ions in the heavy metal solution to a molar amount of manganese ions in the stabilized manganese precipitate is 1:0.1 to 5, preferably 1:0.8 to 1.

An optional technical solution is that, in the above step S300, the precipitation reaction is conducted at a temperature of 25°C to 100°C, preferably 60°C to 100°C, and the precipitation reaction is conducted for 0.1 min to 600 min, preferably 60 min to 180 min.

An optional technical solution is that, in the above step S500, the oxidant is any one or more selected from a group consisting of air, oxygen, oxygen enrichment, ozone, hydrogen peroxide, a persulfate, a hypochlorite and a perchlorate.

An optional technical solution is that, in the above step S500, an amount of the oxidant is 0.5 to 5 times, preferably 1 to 1.5 times a molar amount of manganese ions in the manganese-containing solution.

An optional technical solution is that, in the above step S500, an amount of the alkaline solution is 0.5 to 5 times, preferably 1 to 2 times a molar amount of manganese ions in the manganese-containing solution, and the alkaline solution is any one or more selected from a group consisting of aqueous ammonia, potassium hydroxide, sodium hydroxide and calcium hydroxide.

According to the present disclosure, a alkaline substance (that is, a precipitant) is converted and stabilized by using manganese to generate a stabilized manganese precipitate, that is, a hydroxide or an oxide of manganese, and then a precipitation reaction is conducted on a heavy metal solution with the stabilized manganese precipitate, this process realizes the enrichment of heavy metals, ensures the structural stability and reaction efficiency of the heavy metal precipitate through the manganese conversion reaction and the stabilization reaction, and avoids sodium-ion pollution and processing difficulties caused by traditional precipitant (such as alkali metal). In addition, the water content of the obtained heavy metal precipitate product is low, the sedimentation and filtration performance is greatly improved, and manganese in the precipitated solution can be recovered by oxidation precipitation reaction, solving the problem of system pollution. In addition, the present disclosure benefits from the two combined steps of the manganese conversion reaction and the stabilization reaction, and the obtained stabilized manganese precipitate exhibits excellent chemical performance in the precipitation reaction in step S300, thereby not only improving the recovery rate of heavy metal ions and the product quality, but also improving the precipitation efficiency of heavy metal precipitates such as nickel and cobalt, and achieving efficient recycling of resources. The present disclosure solves the problems of poor sedimentation and filtration performance of precipitated product, high water content of precipitated product and low precipitation efficiency when precipitating heavy metals in the heavy metal solution in the related art.

To the accomplishment of the foregoing and related objects, one or more aspects of the present disclosure comprise features which will be described in detail later and specifically defined in the claims. The following description and the attached drawings set forth in detail certain illustrative aspects of the disclosure. However, these aspects are indicative of only a few of the various ways in which the principles of the disclosure may be employed. Also, the present disclosure is intended to include all such aspects and their equivalents.

### Brief Description of Drawings

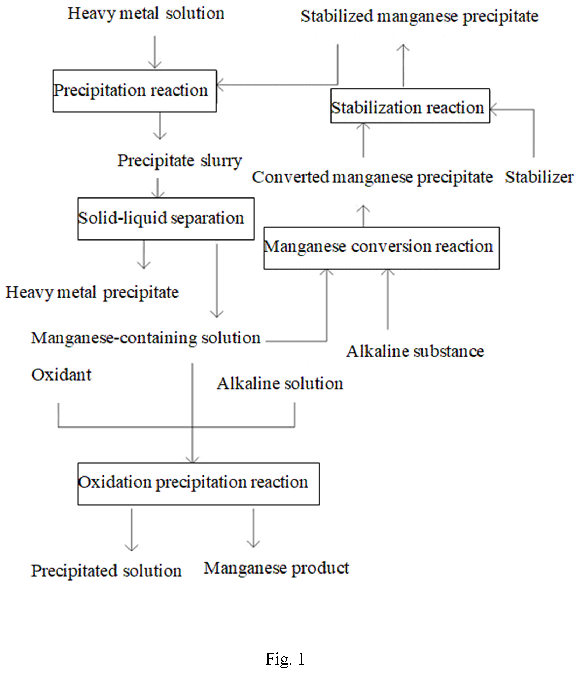

By referring to the following description in conjunction with the accompanying drawings and the contents of the claims, and with a more comprehensive understanding of this disclosure, other objects and results of the present disclosure will become more apparent and readily appreciated. The accompanying drawings, which constitute a part of the present disclosure, are used to provide a further understanding of the present disclosure, and the illustrative embodiments of the present disclosure and the description thereof are used to explain the present disclosure and do not constitute improper limitations to the present disclosure. FIG. 1 shows a flowchart of a method for precipitating heavy metal solution according to an embodiment of the present disclosure.

The same reference numerals indicate similar or corresponding features or functions throughout the drawings.

### Best Mode for Carrying out the Invention

In the following description, for purposes of explanation, numerous specific details are set forth to provide a thorough understanding of one or more embodiments. However, it is apparent that the embodiments in the present disclosure and the features in the embodiments may be combined with each other without conflict; and the embodiments may also be implemented without these specific details. In other examples, well-known structures and devices are shown in block diagram form for ease of description of one or more embodiments.

Specific embodiments of the present disclosure will be described in detail below with reference to the accompanying drawings.

As described in the background section, the methods for precipitating heavy metal in a heavy metal solution in the related art have problems of poor sedimentation and filtration performance of a precipitated product, high water content of the precipitated product and low precipitation efficiency. In order to solve the technical problem, the present disclosure provides a method for precipitating a heavy metal solution.

In order to solve the above problems, the present disclosure provides a method for precipitating a heavy metal solution, cations in the heavy metal solution includinh nickel ions, cobalt ions, copper ions, zinc ions, and manganese ions, wherein the method includes: S100, conducting a manganese conversion reaction on an alkaline substance by using a solution containing manganese ions to obtain a converted manganese precipitate; S200, conducting a stabilization reaction on the converted manganese precipitate by using a stabilizer to obtain a stabilized manganese precipitate; S300, adding the stabilized manganese precipitate into the heavy metal solution for conducting a precipitation reaction to obtain a precipitated slurry; S400, continuously conducting a solid-liquid separation on the precipitated slurry to obtain a heavy metal precipitate and a manganese-containing solution; and S500, conducting an oxidation precipitation reaction on raw materials including the manganese-containing solution, an oxidant, and an alkaline solution to obtain a solution after oxidation precipitation and a manganese product.

According to the present disclosure, an alkaline substance (that is, a precipitant) is converted and stabilized by using manganese to generate a stabilized manganese precipitate, that is, a hydroxide or an oxide of manganese, and then a precipitation reaction is conducted on a heavy metal solution with the stabilized manganese precipitate, this process realizes the enrichment of heavy metals, ensures the structural stability and reaction efficiency of the heavy metal precipitate through the manganese conversion reaction and the stabilization reaction, and avoids sodium-ion pollution and processing difficulties caused by traditional precipitant (such as alkali metal). In addition, the water content of the obtained heavy metal precipitate product is low, the sedimentation and filtration performance are greatly improved, and manganese in the precipitated solution can be recovered by oxidation precipitation reaction, thereby solving the problem of system pollution. In addition, the present disclosure benefits from the two combined steps of the manganese conversion reaction and the stabilization reaction, and the obtained stabilized manganese precipitate exhibits excellent chemical performance in the precipitation reaction in step S300, thereby not only improving the recovery rate of heavy metal ions and the product quality, but also improving the precipitation efficiency of heavy metal precipitates such as nickel and cobalt, and achieving efficient recycling of resources. The present disclosure solves the problems of poor sedimentation and filtration performance of precipitated product, high water content of precipitated product and low precipitation efficiency when precipitating heavy metals in the heavy metal solution in the related art.

In a preferred embodiment, in order to maintain a better precipitation activity of the stabilized manganese precipitate and prevent it from being oxidized after a long time of standing, the stabilized manganese precipitate is returned to the step S300 to participate in the precipitation reaction within 5 min, more preferably within 3 min.

In an embodiment of the present disclosure, in the above step S100, the mass concentration of manganese ions in the solution containing manganese ions is 1 g/L to 300 g/L, preferably 1 g/L to 80 g/L, preferably 1 g/L to 30 g/L, and further preferably 10 g/L to 20 g/L.

The selection of the mass concentration of manganese ions in the manganese-containing solution within the above range is based on the stability and reaction efficiency of manganese ions in the solution, which can ensure the smooth progress of the manganese conversion reaction, avoid the interference of excessive manganese ions on the subsequent precipitation reaction, avoid the waste of resources, and reduce the production cost. The mass concentration of manganese ions in the manganese-containing solution may be 1 g/L, 2 g/L, 3 g/L, 5 g/L, 10 g/L, 20 g/L, 30 g/L, 50 g/L, 60 g/L, 80 g/L, 100 g/L, 120 g/L, 150 g/L, 180 g/L, 200 g/L, 220 g/L, 250 g/L, 280 g/L or 300 g/L, and it is certainly not limited to any one value within the range of 1 g/L to 300 g/L.

The method of the present disclosure can adapt to the treatment of multiple heavy metal-containing solutions, has wide applicability, increases its application potential in different industries, and improves the flexibility and efficiency of resource recovery. In some preferred embodiments of the present disclosure, in the above step S100, the heavy metal solution is any one selected from a group consisting of a solution obtained after an iron and aluminum removal treatment on a laterite nickel ore acid leachate, a battery material black powder leachate in the field of lithium battery recovery, and a copper-cobalt solution in copper-cobalt hydrometallurgy. Of course, the above heavy metal solution may also be a solution containing the above heavy metals after leaching other alloys and wastes, and may also be various types of waste water containing heavy metals, etc., and the metal type may be one or more. That is, the method for precipitating a heavy metal solution according to the present disclosure has a wide application range, and is not limited to a specific industrial field.

In an embodiment of the present disclosure, in the above step S100, the alkaline substance is any one or more selected from a group consisting of a hydroxide, an alkaline earth metal oxide, a carbonate and a bicarbonate, wherein the hydroxide is any one or more selected from a group consisting of sodium hydroxide, potassium hydroxide, magnesium hydroxide, calcium hydroxide, ammonium hydroxide and lithium hydroxide; the alkaline earth metal oxide is any one or more selected from a group consisting of magnesium oxide and calcium oxide; the carbonate is any one or more selected from a group consisting of magnesium carbonate, calcium carbonate, potassium carbonate, sodium carbonate and ammonium carbonate; and the bicarbonate is any one or more selected from a group consisting of magnesium bicarbonate, calcium bicarbonate, potassium bicarbonate, sodium bicarbonate and ammonium bicarbonate.

By using the above alkaline substance, the precipitation activity of the manganese conversion reaction is more suitable, so that the types of the converted manganese precipitate may be more abundant, which is conducive to better morphology of heavy metal precipitate particles, easier liquid-solid separation, lower water content and lower manganese content of the final product. In addition, the above alkaline substances have a wide range of sources, are economical, efficient, and environmentally friendly, and the use of these specific alkaline substances as precipitants may effectively avoid the impurity ions introduced during the use of traditional precipitants, optimize the purity and performance of the precipitate, reduce the difficulty of subsequent processing, and help to realize a cleaner production process. Further, the alkaline substance is preferably a combination of sodium hydroxide and potassium hydroxide, the mass ratio of sodium hydroxide to potassium hydroxide is preferably 1 to 4:1 to 4, for example, the mass ratio of sodium hydroxide to potassium hydroxide may be 1:1, 1:4, 1:2 or 4:1, and certainly it is not limited to any one ratio within the range of 1 to 4:1 to 4.

In order to make the manganese conversion reaction more stable and the stability of the formed stabilized manganese precipitate higher, in a preferred embodiment, in the above step S100, the alkaline substance is added in an amount of 0.1 to 3 times, preferably 0.8 to 1.5 times, and further preferably 0.8 to 0.9 times based on a stoichiometric molar ratio of a chemical reaction between the alkaline substance and the manganese ions to generate a manganese precipitate. By controlling the addition amount of the alkaline substance within the above range, on one hand, a more stable manganese conversion reaction is promoted, and on the other hand, the amount of the generated stabilized manganese precipitate is more suitable, thereby promoting a more efficient and stable precipitation reaction. The alkaline substance may be added at 0.1 times, 0.2 times, 0.3 times, 0.4 times, 0.5 times, 0.6 times, 0.7 times, 0.8 times, 0.9 times, 1 times, 1.1 times, 1.2 times, 1.3 times, 1.4 times, 1.5 times, 2 times, 2.3 times, 2.5 times, 2.8 times or 3 times, and certainly it is not limited to any value within the range of 0.1 times to 3 times.

In addition, the setting of the above range is based on the theory of chemical equilibrium, aiming to achieve the best precipitation effect by accurately controlling the ratio of alkaline substances to manganese ions, while avoiding resource waste and system pollution caused by excessive alkaline substances. This setting not only improves the selectivity and efficiency of the precipitation reaction, but also reduces the precipitation of non-target metals, improving the recovery rate and purity of the target metals.

Based on thermodynamic and kinetic principles, in some preferred embodiments of the present disclosure, in the above step S100, the temperature for the manganese conversion reaction is 25°C to 100°C, preferably 60°C to 100°C, and the time for the manganese conversion reaction is 0.1 min to 30 min, preferably 1 min to 5 min. Controlling these conditions helps to allow the manganese conversion reaction to proceed efficiently under mild conditions, thereby helping to reduce the risk of side reactions and energy consumption that may result from high temperature and long time reactions. Through the optimized conditions of the manganese conversion reaction, not only the conversion rate of the manganese conversion reaction and the quality of the converted manganese precipitate are improved, but also the energy consumption is reduced, which is beneficial to realize the dual benefits of economy and environmental protection. The temperature for the manganese conversion reaction may be 25°C, 30°C, 35°C, 40°C, 45°C, 50°C, 55°C, 60°C, 65°C, 70°C, 75°C, 80°C, 85°C, 90°C, 95°C, or 100°C, and it is certainly not limited to any one value within the range of 25°C to 100°C. The time for the manganese conversion reaction may be 0.1 min, 1 min, 2 min, 3 min, 4 min, 5 min, 6 min, 8 min, 10 min, 12 min, 14 min, 16 min, 18 min, 20 min, 23 min, 25 min, 28 min, or 30 min, and it is certainly not limited to any one value within the range of 0.1 min to 30 min.

In an embodiment of the present disclosure, in the above step S100, the solution containing manganese ions is derived from any one of the manganese-containing solution, a liquid phase after leaching a ternary battery, and a liquid phase of an ore slurry after an one-stage nickel-cobalt precipitation.

The source of the solution containing manganese ions in the step S100 is wide, and may derived from a manganese ions-containing by-product in the recovery process of the lithium ion battery, a manganese ions-containing by-product in the nickel-cobalt precipitation treatment process, or a manganese-containing solution generated in the precipitation process of the heavy metal solution of the present disclosure. It can be seen that, through the method for precipitating a heavy metal solution according to the present disclosure, not only the manganese ions in the manganese ions-containing by-product can be ingeniously used to improve the recovery rate of heavy metal ions and the product quality, but also the recycling of the manganese ions-containing by-product in the above processes are improved, thereby reducing raw material consumption and production cost, reducing waste emission, promoting green manufacturing and sustainable development, and improving the overall economic value.

In order to make the stability of the generated stabilized manganese precipitate better, in some preferred embodiments of the present disclosure, in the above step S200, the temperature for the stabilization reaction is 25°C to 100°C, preferably 60°C to 100°C, and the time for the stabilization reaction is 0.1 min to 180 min, preferably 30 min to 60 min. By controlling the stabilization reaction conditions, it is beneficial to the efficient progress of the stabilization reaction of the converted manganese precipitate, reducing the risk of forming unstable products. The stabilization reaction of the converted manganese precipitate increases the chemical stability of the precipitate, improves the selectivity and efficiency of the subsequent precipitation reaction, and reduces the energy consumption and by-products in the treatment process, thereby optimizing the entire production process. The temperature for the stabilization reaction may be 25°C, 30°C, 35°C, 40°C, 45°C, 50°C, 55°C, 60°C, 65°C, 70°C, 75°C, 80°C, 85°C, 90°C, 95°C or 100°C, and certainly it is not limited to any one value within the range of 25°C to 100°C. The time for the stabilization reaction may be 0.1 min, 1 min, 10 min, 20 min, 30 min, 40 min, 50 min, 60 min, 70 min, 90 min, 100 min, 120 min, 130 min, 140 min, 150 min, 160 min, 170 min or 180 min, and certainly it is not limited to any one value within the range of 0.1 min to 180 min.

In addition, a stabilizer may be added in the process of the above manganese conversion reaction, that is, the manganese conversion reaction and the stabilization reaction are combined into one step; or a stabilizer may be added first and then the manganese conversion reaction is conducted. The three solutions may be selected according to actual conditions.

In an embodiment of the present disclosure, in the above step S200, the mass of the stabilizer is 0.1% to 30% of the mass of the converted manganese precipitate, preferably 1% to 5%.

The above ratio aims to ensure the structural stability and reaction activity of the converted manganese precipitate through an appropriate amount of stabilizer, and avoid the decrease of reactivity caused by excessive stabilization. By optimizing the amount of the stabilizer, not only the stability and reaction rate of the converted manganese precipitate are improved, but also the additional cost and processing difficulty caused by excessive stabilizer are reduced, which helps to achieve a more economical production method. The mass of the stabilizer may be 0.1%, 1%, 2%, 3%, 4%, 5%, 6%, 8%, 10%, 12%, 15%, 18%, 20%, 25%, 28% or 30% of the mass of the converted manganese precipitate, and certainly it is not limited to any one value within the range of 0.1% to 30%.

In order to improve the synergistic coordination effect between the stabilizer and the converted manganese precipitate, so that the stability of the obtained stabilized manganese precipitate is better, in some preferred embodiments of the present disclosure, in above step S200, the stabilizer is any one or more selected from a group consisting of glucose, sulfur dioxide, a sulfite, L-ascorbic acid, an alcohol and an aldehyde. These substances, through oxidation reduction, complexation or adsorption, can effectively stabilize the converted manganese precipitate, and reduce the risk of decomposition or loss of activity during subsequent treatments. Moreover, the use of these stabilizers not only improves the stability of the converted manganese precipitate, but also broadens the selection range of the stabilizer, reduces the dependence on specific stabilizer, and increases the flexibility and cost control capability of the process. In addition, the preferred sulfite is sodium sulfite and/or potassium sulfite, further preferably sodium sulfite.

Based on chemical reaction theory, in some preferred embodiments of the present disclosure, in the above step S300, a ratio of a total molar amount of heavy metal ions in the heavy metal solution to a molar amount of manganese ions in the stabilized manganese precipitate is 1:0.1 to 5, preferably 1:0.8 to 1. The setting of the above ratio aims to promote the effective precipitation of heavy metals through an appropriate amount of stabilized manganese precipitate, avoiding the problems caused by insufficient or excessive precipitant. By controlling the molar ratio of the precipitation reaction, not only the selectivity and efficiency of the precipitation reaction are improved, but also the energy consumption and by-product generation in the precipitation process are reduced, which is beneficial to improving the recovery rate of heavy metals and the product quality, while reducing the production cost. The ratio of a total molar amount of heavy metal ions in the heavy metal solution to a molar amount of manganese ions in the stabilized manganese precipitate may be 1:0.1, 1:0.2, 1:0.5, 1:0.8, 1:0.9, 1:1, 1:1.5, 1:2, 1:2.5, 1:3, 1:3.5, 1:4, 1:4.5 or 1:5, and certainly it is not limited to any one value within the range of 1:0.1 to 5.

Based on thermodynamic and kinetic principles, in some preferred embodiments of the present disclosure, in the above step S300, the temperature for the precipitation reaction is 25°C to 100°C, preferably 60°C to 100°C, and the time for the precipitation reaction is 0.1 min to 600 min, preferably 60 min to 180 min. The preferred above conditions promote the precipitation reaction to proceed efficiently under mild conditions, and reduce metal dissolution and energy waste that may be caused by high temperature and long time reaction. By optimizing the conditions of the precipitation reaction, not only the precipitation efficiency and the metal recovery rate are improved, but also the environmental pollution that may be generated in the reaction process is reduced, which is beneficial to achieve a greener production process. The temperature for the precipitation reaction may be 25°C, 30°C, 35°C, 40°C, 45°C, 50°C, 55°C, 60°C, 65°C, 70°C, 75°C, 80°C, 85°C, 90°C, 95°C, or 100°C, and it is certainly not limited to any one value within the range of 25°C to 100°C. The time for the precipitation reaction may be 0.1 min, 1 min, 10 min, 20 min, 30 min, 50 min, 60 min, 70 min, 90 min, 100 min, 120 min, 130 min, 150 min, 200 min, 250 min, 300 min, 350 min, 400 min, 450 min, 500 min, 550 min or 600 min, and it is certainly not limited to any one value within the range of 0.1 min to 600 min.

In some embodiments of the present disclosure, in the above step S500, the oxidant is any one or more selected from a group consisting of air, oxygen, oxygen enrichment, ozone, hydrogen peroxide, a persulfate, a hypochlorite and a perchlorate.

These oxidants convert the manganese ions in the manganese-containing solution into a precipitable state through oxidation, thereby realizing the recycling of manganese. The use of these specific oxidants not only improves the recovery efficiency of manganese and reduces resource consumption, but also avoids potential safety hazards caused by the use of strong oxidants, which is beneficial to achieve a safer and environment-friendly production process.

In order to more fully oxidize the manganese ions in the manganese-containing solution, based on the chemical reaction theory, in some preferred embodiments of the present disclosure, in the above step S500, an amount of the oxidant is 0.5 to 5 times, preferably 1 to 1.5 times a molar amount of manganese ions in the manganese-containing solution. The setting of this ratio aims to ensure the complete oxidation of manganese by an appropriate amount of oxidant, avoiding the problems caused by insufficient or excessive oxidant. By controlling the amount of the oxidant, not only efficient recovery of manganese is ensured, but also by-products generated due to excessive oxidant are reduced, thereby reducing the processing cost and improving the safety and environmental protection of the production process. The amount of the oxidant may be 0.5 times, 0.8 times, 1 times, 1.2 times, 1.5 times, 2 times, 2.5 times, 3 times, 3.5 times, 4 times, 4.5 times or 5 times the molar amount of manganese ions in the manganese-containing solution, and it is certainly not limited to any one value within the range of 0.5 times to 5 times.

In order to more fully precipitate the oxidized manganese ions in the manganese-containing solution, based on the chemical reaction theory, in some preferred embodiments of the present disclosure, in the above step S500, an amount of the alkaline solution is 0.5 to 5 times, preferably 1 to 2 times a molar amount of manganese ions in the manganese-containing solution, and the alkaline solution is any one or more selected from a group consisting of aqueous ammonia, potassium hydroxide, sodium hydroxide and calcium hydroxide.

The amount of the alkaline solution may be 0.5 times, 0.8 times, 1 times, 1.2 times, 1.5 times, 2 times, 2.5 times, 3 times, 3.5 times, 4 times, 4.5 times or 5 times the molar amount of manganese ions in the manganese-containing solution, and it is certainly not limited to any one value within the range of 0.5 times to 5 times.

The setting of the addition amount and material selection range of the alkaline solution aims to synergistically cooperate with the aforementioned types of oxidants through an appropriate amount of the alkaline solution and specific alkaline substances, thereby promoting the formation of stable precipitates of oxidized manganese ions and achieving efficient recovery of manganese. Moreover, by optimizing the addition amount and selection range of the alkaline solution, not only the efficiency and purity of manganese recovery are improved, but also other impurity ions that may be introduced into the system are reduced, which simplifies the subsequent processing steps and is beneficial to achieve a more efficient and cleaner production method.

In addition, the precipitation method according to the present disclosure is used for the precipitation of a magnesium ion-free heavy metal solution, and is particularly suitable for the following solutions, preferably the cationic components in the heavy metal solution are as follows: 1 g/L to 100g/L of nickel ions, 0.1g/L to 30 g/L of cobalt ions, 0.1g/L to 50 g/L of copper ions, 1 g/L to 80 g/L of divalent manganese ions, and 0.1 g/L to 30 g/L of zinc ions. Further, 1 g/L to 3 g/L of nickel ions, 0.1 g/L to 1 g/L of cobalt ions, 0.1 g/L to 1 g/L of copper ions, 1 g/L to 5 g/L of divalent manganese ions, and 0.1 g/L to 1 g/L of zinc ions are preferred, and the preferred ion concentration ranges are more matched with the specific process flow of the present disclosure and the control of specific conditions in each step, so that the precipitation process of the heavy metal solution is more optimized.

The present disclosure is further described in detail below with reference to specific examples, and these examples should not be construed as limiting the claimed scope of the present disclosure.

The object treated in the following examples is a heavy metal solution (aqueous solution), where the anions are sulfate ions, and the cationic components are as follows:

| Types of cations | Ni²⁺ | Co²⁺ | Cu²⁺ | Mn²⁺ | Zn²⁺ |
|---|---|---|---|---|---|
| Concentration | 1~3g/L | 0.1~1g/L | 0.1~1g/L | 1-5g/L | 0.1~1g/L |

### Example 1

An intermediate product obtained when recovering nickel-cobalt hydroxide by precipitation of a solution with iron and aluminum removed in a hydrometallurgical process of laterite nickel ore:
Referring to a flowchart of a method for precipitating a heavy metal solution shown in FIG. 1, to a liquid phase of the ore slurry containing 3g/L of manganese obtained after an one-stage nickel-cobalt precipitation used as a solution containing manganese ions, sodium hydroxide was added in an amount of 0.9 times the chemical reaction stoichiometric molar ratio of manganese to conduct a manganese conversion reaction at 60°C for 1 min, to obtain a converted manganese precipitate. Sodium sulfite was added in a mass of 0.1% of the converted manganese precipitate to conduct stabilization reaction on the converted manganese precipitate at 60°C for 10 min, to obtain a stabilized manganese precipitate.

The stabilized manganese precipitate was returned to the heavy metal solution for conducting a precipitation reaction at 60°C for 90 min to obtain a precipitated slurry, the addition amount of manganese ions in the stabilized manganese precipitate was 0.9 times the total molar amount of heavy metal ions in the heavy metal solution. The precipitated slurry was continuously subjected to a solid-liquid separation to obtain a nickel-cobalt hydroxide and a manganese-containing solution. To the manganese-containing solution was added oxygen and aqueous ammonia for conducting an oxidation precipitation reaction at 60°C for 400 min, the amount of the oxidant was 3 times the molar amount of manganese ions in the manganese-containing solution, the amount of aqueous ammonia was 2 times the molar amount of manganese ions in the manganese-containing solution, and a manganese product was obtained after the reaction was completed. The obtained nickel-cobalt hydroxide had a water content of 45%, a nickel content of 40%, and a manganese content of 6%.

### Example 2

Precipitation and enrichment of a liquid phase after leaching a ternary battery:
Referring to a flowchart of a method for precipitating a heavy metal solution shown in FIG. 1, to a liquid phase after leaching a ternary battery containing 15 g/L of manganese used as a solution containing manganese ions, sodium hydroxide was added in an amount of 0.9 times the chemical reaction stoichiometric molar ratio of manganese to conduct a manganese conversion reaction at 60°C for 1 min, to obtain a converted manganese precipitate. Sodium sulfite was added in an mass of 0.5% of the converted manganese precipitate to conduct a stabilization reaction on the converted manganese precipitate at 60°C for 10 min, to obtain a stabilized manganese precipitate.

The stabilized manganese precipitate was returned to the heavy metal solution for conducting a precipitation reaction at 60°C for 90 min to obtain a precipitated slurry, the addition amount of manganese ions in the stabilized manganese precipitate was 0.9 times the total molar amount of heavy metal ions in the heavy metal solution. The precipitated slurry was continuously subjected to a solid-liquid separation to obtain a nickel-cobalt hydroxide and a manganese-containing solution. To the manganese-containing solution was added oxygen and aqueous ammonia for conducting an oxidation precipitation reaction at 60°C for 400 min, the amount of the oxidant was 3 times the molar amount of manganese ions in the manganese-containing solution, the amount of aqueous ammonia was 2 times the molar amount of manganese ions in the manganese-containing solution, and a manganese product was obtained after the reaction was completed. The obtained nickel-cobalt hydroxide had a water content of 45%, a nickel content of 41%, and a manganese content of 7%.

### Example 3

The method was conducted in the same manner as in Example 1, except that the liquid phase of an ore slurry obtained after an one-stage nickel-cobalt precipitation contained 20 g/L of manganese, and the nickel-cobalt hydroxide finally obtained, after detection, had a water content of 45%, a nickel content of 39% and a manganese content of 8%.

### Example 4

The method was conducted in the same manner as in Example 1, except that the liquid phase of an ore slurry obtained after an one-stage nickel-cobalt precipitation contained 30 g/L of manganese, and the nickel-cobalt hydroxide finally obtained, after detection, had a water content of 40%, a nickel content of 39% and a manganese content of 8.5%.

### Example 5

The method was conducted in the same manner as in Example 1, except that the liquid phase of an ore slurry obtained after an one-stage nickel-cobalt precipitation contained 1 g/L of manganese, and the nickel-cobalt hydroxide finally obtained, after detection, had a water content of 55%, a nickel content of 38% and a manganese content of 5.5%.

### Example 6

The method was conducted in the same manner as in Example 1, except that the liquid phase of an ore slurry obtained after an one-stage nickel-cobalt precipitation contained 80 g/L of manganese, and the nickel-cobalt hydroxide finally obtained, after detection, had a water content of 50%, a nickel content of 37% and a manganese content of 10%.

### Example 7

The method was conducted in the same manner as in Example 1, except that a combination of sodium hydroxide and potassium hydroxide, in a mass ratio of sodium hydroxide to potassium hydroxide of 4:4, was used as the alkaline substance, and the nickel-cobalt hydroxide finally obtained, after detection, had a water content of 48%, a nickel content of 40%, and a manganese content of 6%.

### Example 8

The method was conducted in the same manner as in Example 1, except that a combination of sodium hydroxide and potassium hydroxide, in a mass ratio of sodium hydroxide to potassium hydroxide of 1:4, was used as the alkaline substance, and the nickel-cobalt hydroxide finally obtained, after detection, had a water content of 50%, a nickel content of 40.5%, and a manganese content of 6.5%.

### Example 9

The method was conducted in the same manner as in Example 1, except that sodium hydroxide was added in an amount of 0.8 times the chemical reaction stoichiometric molar ratio of manganese to conduct the manganese conversion reaction, and the nickel-cobalt hydroxide finally obtained, after detection, had a water content of 44%, a nickel content of 41%, and a manganese content of 5.5%.

### Example 10

The method was conducted in the same manner as in Example 1, except that sodium hydroxide was added in an amount of 0.1 times the chemical reaction stoichiometric molar ratio of manganese to conduct the manganese conversion reaction, and the nickel-cobalt hydroxide finally obtained, after detection, had a water content of 43%, a nickel content of 41%, and a manganese content of 5%.

### Example 11

The method was conducted in the same manner as in Example 1, except that sodium hydroxide was added in an amount of 1.5 times the chemical reaction stoichiometric molar ratio of manganese to conduct the manganese conversion reaction, and the nickel-cobalt hydroxide finally obtained, after detection, had a water content of 55%, a nickel content of 38%, and a manganese content of 11%.

### Example 12

The method was conducted in the same manner as in Example 1, except that the manganese conversion reaction was conducted at 100°C for 5 min, and the nickel-cobalt hydroxide finally obtained, after detection, had a water content of 42%, a nickel content of 41%, and a manganese content of 5%.

### Example 13

The method was conducted in the same manner as in Example 1, except that the manganese conversion reaction was conducted at 25°Cfor 30 min, and the nickel-cobalt hydroxide finally obtained, after detection, had a water content of 50%, a nickel content of 41%, and a manganese content of 5%.

### Example 14

The method was conducted in the same manner as in Example 1, except that the stabilization reaction was conducted at 100°C for 5 min, and the nickel-cobalt hydroxide finally obtained, after detection, had a water content of 45%, a nickel content of 40%, and a manganese content of 5%.

### Example 15

The method was conducted in the same manner as in Example 1, except that the stabilization reaction was conducted at 25°C for 180 min, and the nickel-cobalt hydroxide finally obtained, after detection, had a water content of 45%, a nickel content of 39.5%, and a manganese content of 7%.

### Example 16

The method was conducted in the same manner as in Example 1, except that the mass of the added sodium sulfite was 5% of the converted manganese precipitate, and the nickel-cobalt hydroxide finally obtained, after detection, had a water content of 45%, a nickel content of 40.5%, and a manganese content of 6.3%.

### Example 17

The method was conducted in the same manner as in Example 1, except that L-ascorbic acid was added to stabilize the converted manganese precipitate, and the nickel-cobalt hydroxide finally obtained, after detection, had a water content of 45%, a nickel content of 41% and a manganese content of 6.2%.

### Example 18

The method was conducted in the same manner as in Example 1, except that the addition amount of manganese ions in the stabilized manganese precipitate was 1 times the total molar amount of heavy metal ions in the heavy metal solution, and the nickel-cobalt hydroxide finally obtained, after detection, had a water content of 45.3%, a nickel content of 40.1%, and of manganese content of 6.1%.

### Example 19

The method was conducted in the same manner as in Example 1, except that the addition amount of manganese ions in the stabilized manganese precipitate was 0.2 times the total molar amount of heavy metal ions in the heavy metal solution, and the nickel-cobalt hydroxide finally obtained, after detection, had a water content of 45.1%, a nickel content of 39.5%, and a manganese content of 7%.

### Example 20

The method was conducted in the same manner as in Example 1, except that the amount of the oxidant was 1 times the molar amount of manganese ions in the manganese-containing solution, the amount of aqueous ammonia was 1 times the molar amount of manganese ions in the manganese-containing solution, and the nickel-cobalt hydroxide finally obtained, after detection, had a water content of 46%, a nickel content of 41.2%, and a manganese content of 5%.

### Example 21

The method was conducted in the same manner as in Example 1, except that the amount of the oxidant was 0.5 times the molar amount of manganese ions in the manganese-containing solution, the amount of aqueous ammonia was 0.5 times the molar amount of manganese ions in the manganese-containing solution, and the nickel-cobalt hydroxide finally obtained, after detection, had a water content of 45.2%, a nickel content of 40%, and a manganese content of 6.1%.

### Comparative Example 1

The method was conducted in the same manner as in Example 1, except that the heavy metal solution was directly subjected to a precipitation reaction with a pre-prepared 20% sodium hydroxide aqueous solution at a reaction temperature of 60°C for a reaction time of 0.5 h to obtain a precipitated slurry; the precipitated slurry was continuously subjected to a solid-liquid separation to obtain a nickel-cobalt hydroxide and a precipitated solution, and the nickel-cobalt hydroxide had a water content of 80%, a nickel content of 30% and a manganese content of 20% after detection.

### Comparative Example 2

The method was conducted in the same manner as in Example 1, except for the following differences.

To a liquid phase after leaching a ternary battery containing 15 g/L of manganese used as a solution containing manganese ions, sodium hydroxide was added in an amount of 0.9 times the chemical reaction stoichiometric molar ratio of manganese to conduct a manganese conversion reaction at 60°C for 1 min, to obtain a converted manganese precipitate.

The converted manganese precipitate was directly returned to the heavy metal solution for conducting a precipitation reaction at 60°C for 90 min to obtain a precipitated slurry, the addition amount of manganese ions in the converted manganese precipitate was 0.9 times the total molar amount of heavy metal ions in the heavy metal solution. The precipitated slurry was continuously subjected to a solid-liquid separation to obtain a nickel-cobalt hydroxide and a manganese-containing solution. To the manganese-containing solution was added oxygen and aqueous ammonia for conducting an oxidation precipitation reaction at 60°C for 400 min, the amount of the oxidant was 3 times the molar amount of manganese ions in the manganese-containing solution, the amount of aqueous ammonia was 2 times the molar amount of manganese ions in the manganese-containing solution, and a manganese product was obtained after the reaction was completed. The obtained nickel-cobalt hydroxide had a water content of 80%, a nickel content of 34%, and a manganese content of 15%.

### Comparative Example 3

The method was conducted in the same manner as in Example 2, except for the following differences.

To a liquid phase after leaching a ternary battery containing 15 g/L of manganese used as a solution containing manganese ions, sodium hydroxide was added in an amount of 0.9 times the chemical reaction stoichiometric molar ratio of manganese to conduct a manganese conversion reaction at 60°C for 1 min to obtain a converted manganese precipitate.

The converted manganese precipitate was returned to the heavy metal solution for conducting a precipitation reaction at 60°C for 90 min to obtain a precipitated slurry, the addition amount of manganese ions in the converted manganese precipitate was 0.9 times the total molar amount of heavy metal ions in the heavy metal solution. The precipitated slurry was continuously subjected to a solid-liquid separation to obtain a nickel-cobalt hydroxide and a manganese-containing solution. To the manganese-containing solution was added oxygen and aqueous ammonia for conducting an oxidation precipitation reaction at 60°C for 400 min, the amount of the oxidant was 3 times the molar amount of manganese ions in the manganese-containing solution, the amount of aqueous ammonia was 2 times the molar amount of manganese ions in the manganese-containing solution, and a manganese product was obtained after the reaction was completed. The obtained nickel-cobalt hydroxide had a water content of 70%, a nickel content of 34%, and a manganese content of 14%.

From the above description, it can be seen that the above embodiments of the present disclosure achieve the following technical effects:
The present disclosure provides a method for converting and stabilizing a alkaline substance (that is, a precipitant) by using manganese to generate a stabilized manganese precipitate, that is, a hydroxide or an oxide of manganese, and then a precipitation reaction is conducted on a heavy metal solution with the stabilized manganese precipitate, this process realizes the enrichment of heavy metals, ensures the structural stability and reaction efficiency of the heavy metal precipitate through the manganese conversion reaction and the stabilization reaction, avoids sodium-ion pollution and processing difficulties caused by traditional precipitant (such as alkali metal). In addition, the water content of the obtained heavy metal precipitate product is low, the sedimentation and filtration performance is greatly improved, and manganese in the precipitated solution can be recovered by oxidation precipitation reaction, solving the problem of system pollution. In addition, the present disclosure benefits from the two combined steps of the manganese conversion reaction and the stabilization reaction, and the obtained stabilized manganese precipitate exhibits excellent chemical performance in the precipitation reaction in step S300, thereby not only improving the recovery rate of heavy metal ions and the product quality, but also improving the precipitation efficiency of heavy metal precipitates such as nickel and cobalt, and achieving efficient recycling of resources. The present disclosure solves the problems of poor sedimentation and filtration performance of precipitated product, high water content of precipitated products and low precipitation efficiency when precipitating heavy metals in the heavy metal solution in the related art.

The above is only the preferred embodiment of this disclosure and is not intended to limit this disclosure. For those skilled in the art, this disclosure can have various modifications and changes. Any modification, equivalent replacement, or improvement made without departing from the spirit and principle of the present disclosure should fall within the protection scope of the present disclosure.

## Claims

1. A method for precipitating a heavy metal solution, cations in the heavy metal solution including nickel ions, cobalt ions, copper ions, zinc ions and manganese ions, **characterized in that**: the method comprises:
S100, conducting a manganese conversion reaction on an alkaline substance by using a solution containing manganese ions to obtain a converted manganese precipitate;
S200, conducting a stabilization reaction on the converted manganese precipitate by using a stabilizer to obtain a stabilized manganese precipitate;
S300, adding the stabilized manganese precipitate into the heavy metal solution for conducting a precipitation reaction to obtain a precipitated slurry;
S400, continuously conducting a solid-liquid separation on the precipitated slurry to obtain a heavy metal precipitate and a manganese-containing solution; and
S500, conducting an oxidation precipitation reaction on raw materials including the manganese-containing solution, an oxidant, and an alkaline solution to obtain a solution after oxidation precipitation and a manganese product.

2. The method for precipitating a heavy metal solution according to claim 1, **characterized in that**: in S100, the solution containing manganese ions has a mass concentration of manganese ions of 1 g/L to 300 g/L.

3. The method for precipitating a heavy metal solution according to claim 1, **characterized in that**: in S100, the heavy metal solution is any one selected from a group consisting of a solution obtained after an iron and aluminum removal treatment on a laterite-nickel ore acid leachate, a battery material black powder leachate in the field of lithium battery recovery, and a copper-cobalt solution in copper-cobalt hydrometallurgy.

4. The method for precipitating a heavy metal solution according to any one of claims 1 to 3, **characterized in that**: in S100, the alkaline substance is any one or more selected from a group consisting of a hydroxide, an alkaline earth metal oxide, a carbonate and a bicarbonate, wherein the hydroxide is any one or more selected from a group consisting of sodium hydroxide, potassium hydroxide, magnesium hydroxide, calcium hydroxide, ammonium hydroxide and lithium hydroxide; the alkaline earth metal oxide is any one or more selected from a group consisting of magnesium oxide and calcium oxide; the carbonate is any one or more selected from a group consisting of magnesium carbonate, calcium carbonate, potassium carbonate, sodium carbonate and ammonium carbonate; and the bicarbonate is any one or more selected from a group consisting of magnesium bicarbonate, calcium bicarbonate, potassium bicarbonate, sodium bicarbonate and ammonium bicarbonate.

5. The method for precipitating a heavy metal solution according to any one of claims 1 to 3, **characterized in that**: in S100, the alkaline substance is added in an amount of 0.1 to 3 times based on a stoichiometric molar ratio of a chemical reaction between the alkaline substance and the manganese ions to generate a manganese precipitate.

6. The method for precipitating a heavy metal solution according to any one of claims 1 to 3, **characterized in that**: in S100, the manganese conversion reaction is conducted at a temperature of 25°C to 100°C for a period of 0.1 min to 30 min.

7. The method for precipitating a heavy metal solution according to any one of claims 1 to 3, **characterized in that**: in S100, the solution containing manganese ions is derived from any one selected from a group consisting of the manganese-containing solution, a liquid phase after leaching a ternary battery, and a liquid phase of an ore slurry after an one-stage nickel-cobalt precipitation.

8. The method for precipitating a heavy metal solution according to any one of claims 1 to 3, **characterized in that**: in S200, the stabilization reaction is conducted at a temperature of 25°C to 100°C for a period of 0.1 min to 180 min.

9. The method for precipitating a heavy metal solution according to any one of claims 1 to 3, **characterized in that**: in S200, the mass of the stabilizer is 0.1% to 30% of the mass of the converted manganese precipitate.

10. The method for precipitating a heavy metal solution according to any one of claims 1 to 3, **characterized in that**: in S200, the stabilizer is any one or more selected from a group consisting of glucose, sulfur dioxide, a sulfite, L-ascorbic acid, an alcohol and an aldehyde.

11. The method for precipitating a heavy metal solution according to any one of claims 1 to 3, **characterized in that**: in S300, a ratio of a total molar amount of heavy metal ions in the heavy metal solution to a molar amount of manganese ions in the stabilized manganese precipitate is 1:0.1 to 5.

12. The method for precipitating a heavy metal solution according to any one of claims 1 to 3, **characterized in that**: in S300, the precipitation reaction is conducted at a temperature of 25°C to 100°C for a period of 0.1 min to 600 min.

13. The method for precipitating a heavy metal solution according to any one of claims 1 to 3, **characterized in that**: in S500, the oxidant is any one or more selected from a group consisting of air, oxygen, oxygen enrichment, ozone, hydrogen peroxide, a persulfate, a hypochlorite and a perchlorate.

14. The method for precipitating a heavy metal solution according to any one of claims 1 to 3, **characterized in that**: in S500, an amount of the oxidant is 0.5 to 5 times a molar amount of manganese ions in the manganese-containing solution.

15. The method for precipitating a heavy metal solution according to any one of claims 1 to 3, **characterized in that**: in S500, an amount of the alkaline solution is 0.5 to 5 times a molar amount of manganese ions in the manganese-containing solution, and the alkaline solution is any one or more selected from a group consisting of aqueous ammonia, potassium hydroxide, sodium hydroxide and calcium hydroxide.
